# EUROPEAN PATENT APPLICATION

(11) **EP 4 060 583 A1**
(43) Date of publication of application: **21.09.2022**
(21) Application number: 19952847.2
(22) Date of filing: 15.11.2019
(51) Int. Cl.: G06Q 20/06

(54) **CONTROL METHOD, CONTROL PROGRAM, INFORMATION PROCESSING DEVICE, AND CONTROL SYSTEM**

(71) Applicant: FUJITSU LIMITED, Kawasaki-shi, Kanagawa 211-8588 (JP)
(72) Inventor: FUJIMOTO, Shingo, Kawasaki-shi, Kanagawa 211-8588 (JP); MORINAGA, Masanobu, Kawasaki-shi, Kanagawa 211-8588 (JP)
(74) Representative: Hoffmann Eitle
(86) International application number: PCT/JP2019/044969
(87) International publication number: WO 2021/095266

(57) **Abstract**

A control method executed by a computer of information apparatus, in which the information processing apparatus controls a link between a first blockchain that handles a first currency and a second blockchain that handles a second currency, the control method includes determining, when an issuance request of the second currency is received from a user, an allowable payment amount of the second currency based on credit information of the user, transmitting, to the first blockchain, an instruction to notify the second blockchain of the allowable payment amount, and transmitting, when a payment transaction in the second currency by the user is recorded in the second blockchain, an instruction to collect the first currency that has a value that corresponds to the second currency from an account of the user on the first blockchain, to the first blockchain.

## Description

### [Technical Field]

The present invention relates to a control method, a control program, an information processing apparatus, and a control system for performing a settlement of a transaction managed by a blockchain.

### [Background Art]

In recent years, transactions of crypto assets such as virtual currencies have been increasing, and a blockchain is expected to be useful as a distributed ledger management technology that may ensure operational transparency in a decentralized manner. Assets managed on the blockchain, for example, crypto assets, are protected by a cryptographic technology, have a value that may be exchanged with articles and services in the real world, and have been used as a settlement means instead of cash.

Furthermore, a smart contract mediates between blockchains of crypto assets, so that a crypto asset chain that manages a ledger for asset management and a settlement token chain that manages a ledger for management of a settlement token to be paid as a consideration for a service may be linked.

Conventionally, as a technology related to a settlement of a transaction, for example, there has been a technology for transmitting an allocation of electronic money from an account of a user managed by a host to a terminal of the user to pay a price at an upper limit of the allocated electronic money (for example, see PTL 1 described below). Furthermore, there has been a technology for determining success or failure of a transaction by executing an account operation interlocked with a transaction of an escrow settlement by a smart contract and comparing a deposit amount of an account of a user with a product price (for example, see PTL 2 described below). Furthermore, there has been a technology for determining propriety of an immediate settlement using electronic money of a user by a credit procedure of a server (for example, see PTL 3 described below).

### [Citation List]

### [Patent Literature]

[PTL] 1: Japanese National Publication of International Patent Application No. 2014-530433.
[PTL 2] Japanese Laid-open Patent Publication No. 2018-139068.
[PTL 3] International Publication Pamphlet No. WO 2007/018119

### [Summary of Invention]

### [Technical Problem]

In a transaction managed by a blockchain, when validity of a record of transfer of crypto assets to another person, for example, transaction data is checked, all records on the blockchain are examined to check if there are any double transactions or insufficient balance. In a conventional technology, even when a smart contract function is used, access to a server as a management node is indispensable at the time of this check, and in the case of an environment where a user may not access the blockchain, the check may not be performed, which causes inconvenience to transactions. For example, when a user settles a transaction at an overseas travel destination, in the case of, for example, a communication environment where a settlement terminal may not connect to a server that manages credit information, a state is caused where a credit settlement (deferred payment) may not be completed. In this way, there is a problem with the conventional settlement technology using the blockchain.

In one aspect, the present invention aims to provide a new settlement technology using a blockchain.

### [Solution to Problem]

According to one aspect of the present invention, a control method executed by a computer of an information processing apparatus is proposed, in which the information processing apparatus controls a link between a first blockchain that handles a first currency and a second blockchain that handles a second currency, the control method including processing of: determining, when an issuance request of the second currency is received from a user, an allowable payment amount of the second currency on the basis of credit information of the user, and transmitting, to the first blockchain, an instruction to notify the second blockchain of the allowable payment amount; and transmitting, when a payment transaction in the second currency by the user is recorded in the second blockchain, an instruction to collect the first currency that has a value that corresponds to the second currency from an account of the user on the first blockchain, to the first blockchain.

### [Advantageous Effects of Invention]

According to one aspect of the present invention, an effect of reducing complexity of a settlement procedure in different currencies is exerted.

### [Brief Description of Drawings]

FIG. 1 is an explanatory diagram illustrating a control system including an information processing apparatus related to transaction processing according to an embodiment;
FIG. 2 is a diagram illustrating an exemplary structure of blockchains including the information processing apparatus according to the embodiment;
FIG. 3 is a block diagram illustrating an exemplary structure of the information processing apparatus according to the embodiment;
FIG. 4 is a diagram illustrating an exemplary hardware structure of the information processing apparatus according to the embodiment;
FIG. 5 is a flowchart illustrating an example of processing a transaction performed by the information processing apparatus according to the embodiment;
FIG. 6 is a flowchart illustrating another example of processing a transaction performed by the information processing apparatus according to the embodiment; and
FIG. 7 is an explanatory diagram illustrating a specific example of a transaction performed by the information processing apparatus according to the embodiment.

### [Description of Embodiments]

Hereinafter, an embodiment of a control method, a control program, an information processing apparatus, and a control system disclosed herein will be described in detail with reference to the drawings.

In the disclosed technology, a ledger for asset management (for example, a crypto asset chain) and a ledger for management of a settlement token to be paid as a consideration for a service (settlement token chain), which are different blockchains (BCs), are linked by a smart contract function of the information processing apparatus. Then, an issuer of a settlement token, such as an operator, pays out a token including information regarding an allowable payment amount to an account (for example, a credit account) provided on the settlement token chain according to a credibility score obtained by scoring credibility of a transaction of a user.

In the settlement token chain, a transaction of each purchase of a product by the user may be operated offline within the allowable payment amount indicated by the token, in other words, transaction processing may be performed only in the settlement token chain, and communication with the outside (crypto asset chain and the like) may be made unnecessary.

Then, the smart contract of the information processing apparatus monitors remittance from the credit account to an account of another person such as a store in the settlement token chain, and periodically requests a payment of a price in crypto assets equivalent to a remittance amount on a settlement date or the like. Then, in a case where the payment of the price in the crypto assets is delayed or the payment fails, processing of changing the credibility score of the user low, and reducing an amount of settlement tokens to be paid out to the credit account from the next time is performed, for example, as a penalty.

In general, an advance payment is mandatory for a transaction using crypto assets. On the other hand, in the embodiment, by generating a token indicating a fixed amount of deposit or credit information of solvency, and passing the token between blockchains, advance payment of an actual currency or the like is made unnecessary. Furthermore, a credit procedure that needs communicative connection to the outside of a blockchain for each transaction is made unnecessary, and a collective deferred payment is implemented on a settlement date. Furthermore, a payment of a price to a store or the like is promptly implemented for each transaction of a user.

### (Embodiment)

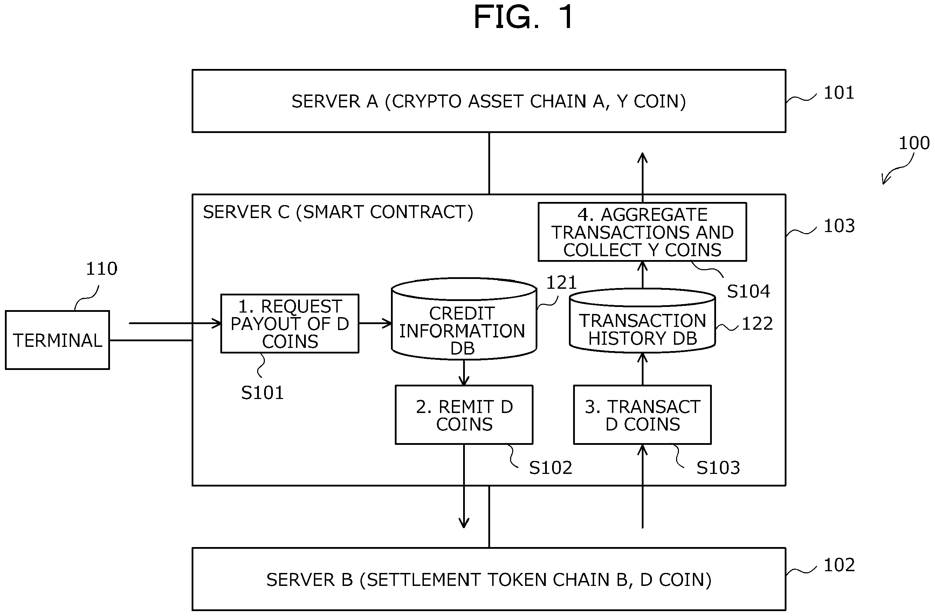

FIG. 1 is an explanatory diagram illustrating a control system including an information processing apparatus related to transaction processing according to the embodiment. A control system 100 includes a plurality of servers A to C (101 to 103) and a terminal 110.

The server A (101, first server) manages a crypto asset chain A of a user, and manages crypto assets (crypto currency, Y coin, or first currency). The Y coin may also be a crypto asset (so-called stablecoin) that is operated by a bank or the like and that may be exchanged with legal tender. The server A (101) controls remittance of the Y coin to a user account, an operator account, or the like on the crypto asset chain A.

The server B (102, second server) manages a settlement token chain B in which a user makes a transaction, and manages crypto assets (crypto currency, D coin, or second currency). For example, the server B (102) manages a settlement token (equivalent to a D coin that may be paid) that is operated by a credit card company or the like, and that may be used to pay a price of a service at a store. The server B (102) controls remittance of the D coin to a store account, a credit account, or the like on the settlement token chain B.

The server C (103) corresponds to the information processing apparatus of the embodiment, has a smart contract function, and is arranged between the server A (101) and the server B (102). The server C (103) performs network communication between the server A (101) and the server B (102), and mediates exchange of asset information between the crypto asset chain A and the settlement token chain B, which are different blockchains.

The server C (103) includes a function of remitting the Y coin of the crypto asset chain A and the D coin of the settlement token chain B to each other at a predetermined rate. Then, in the embodiment, the server C (103) holds credit information of a user and transaction information in a credit information database (DB) 121 and a transaction history DB 122, respectively.

The credit information DB 121 includes, for example, evaluation of crypto assets held by a user on the crypto asset chain A, for example, an evaluation value of the Y coin held, a predetermined credibility score calculated from past transactions of the user, and the like. The transaction history DB 122 accumulates and holds a past history of settlements performed by a user on the settlement token chain B, for example, date and time of each purchase of a product, a purchase amount (Y coin), and the like.

The terminal 110 is held by a user who makes a transaction, and is communicatively connected to the server C (103) via a network.

Here, it is assumed that a user who uses the control system 100 has an account on both the crypto asset chain A of the Y coin and the settlement token chain B of the D coin. The server C (103) generates credit information (token) regarding a transaction of the user at a time before the user makes a transaction such as purchase of a product at a store of the settlement token chain B, and transmits the credit information (token) to the server B (102) of the settlement token chain.

For example, the token is information including an allowable payment amount (token amount) that the user may transact on the settlement token chain B based on crypto assets (Y coins) held by the user.

The server C (103) as the information processing apparatus sequentially executes the following processing 1. to 4.
1. "Issuance request of D coins by a user before settlement"
2. "Remittance of D coins to the settlement token chain B"
3. "Transaction of D coins on the settlement token chain B"
4. "Transaction aggregation and collection of Y coins"

Regarding the processing of 1., in a case where the user plans to make a transaction on the settlement token chain B, the user operates the terminal 110 to request the server C (103) to issue (pay out) D coins at a time before the transaction is made (Step S101). For example, the user requests issuance of equivalent to a total amount of settlement planned to make during overseas travel. At this time, the user may request issuance of D coins or Y coins equivalent to an amount of the D coins, which are different currencies, and when issuance of the Y coins is requested, the server C (103) calculates an amount of D coins obtained by rate conversion of an amount of the Y coins.

The server C (103) generates an allowable payment amount (token) that may be transacted as credit information of a transaction of the user in response to the issuance request of the user. Then, the server C (103) accesses the credit information DB 121, checks an issue limit amount of payout based on an amount of Y coins that have held by the user on the crypto asset chain A, and determines propriety of issuance (payout). For example, the server C (103) permits this issuance (payout) request when a payout request amount of D coins (after rate conversion of Y coins into D coins) requested by the user to be issued is not more than the issue limit amount, and generates a token indicating a predetermined allowable payment amount.

In the processing of 2., when the payout is permitted, the server C (103) causes D coins (tokens) equivalent to the allowable payment amount to be remitted from the server A (101) of the crypto asset chain A to the server B (102) of the settlement token chain B (Step S102). As a result, the user may make a transaction such as purchase of a product using D coins within a range of the allowable payment amount during overseas travel.

The processing of 1. and 2. described above is processing performed at a time before the user makes an actual transaction, and thereafter, the user actually purchases a product in the processing of 3.

In the processing of 3., the user makes a payment transaction of D coins on the settlement token chain B for each purchase of a product, or the like at a store. Information for each payment transaction of D coins is notified from the server B (102) of the settlement token chain B to the server C (103) (Step S103). The server C (103) accumulates information for each payment transaction of D coins of the user (for example, a product purchase date and an amount of D coins) in the transaction history DB 122.

At the time of the processing of 3., the server B (102) of the settlement token chain B does not need to communicate with the server C (103) and even with the server A (101) of the crypto asset chain A for each payment transaction of the user. Processing for each transaction is executed sequentially by using the allowable payment amount (D coin that has been remitted) indicated by the token. Since the token is the information indicating the allowable payment amount, it is possible to make actual currency remittance (fund transfer) between the crypto asset chain A and the settlement token chain B unnecessary.

In the processing of 4., for example, when a settlement date set every month is reached, the server C (103) aggregates the D coins for each transaction by the user, and makes a collective settlement by Y coins obtained by rate conversion of the aggregated D coins. At this time, the server C (103) accesses the server A (101) to cause the aggregated Y coins to be collected from a user account on the crypto asset chain A (Step S104). Furthermore, when a payment transaction by the user with D coins is recorded in the settlement token chain B, the server C (103) may also transmit, to the server A (101) of the crypto asset chain A, an instruction to collect Y coins having a value corresponding to the D coins from the user account on the crypto asset chain A. In this way, the actual fund transfer (collection of Y coins) of the user may be performed only in the crypto asset chain A. Although the embodiment is described as remittance of D coins for the sake of convenience, it is actually transmission of the token indicating the allowable payment amount.

By the above processing 1. to 4., a settlement does not occur only by the payout of the token, and the server B (102) of the settlement token chain B makes a payment transaction within the range of the remittance amount (allowable payment amount) of the D coins for each payment transaction of the user. Then, the server C (103) causes the server A (101) of the crypto asset chain A to collectively collect a price of a total transaction amount obtained by aggregating a plurality of payment transactions on the settlement date or the like. In this way, the smart contract (server C) mediates between the crypto asset chain A and the settlement token chain B, and causes automatic withdrawal to be performed from the user account of the crypto asset chain A at the time of the settlement.

The processing of 1. to 4. described above mainly indicate basic processing contents performed by the server C (103) of the embodiment. In addition, the server C (103) may also cause processing of changing the credibility score of the credit information DB 121 lower (downgrading credit) to be performed when collection of the price fails in the processing of 4. described above. In this case, the server C (103) may reduce the amount of the D coins to be issued (paid out) in the processing of 2.

In addition, in the processing of 2., the server C (103) may also change the issue limit amount according to an account balance of the D coins. For example, the server C (103) may also acquire the account balance of the D coins from the crypto asset chain A every time the user makes 1. the issuance (payout) request of D coins, set a predetermined issue limit amount according to the acquired account balance, and update and hold the issue limit amount in the credit information DB 121.

Moreover, during the time of the processing transition of 2., for example, during a period until the settlement is made by the user, the user may make the issuance (payout) request of D coins again in the processing of 1. by an operation of the user. For example, in a case where an amount of use of D coins increases during overseas travel, it is possible to request an additional payout request amount.

In the embodiment, when the user purchases a product, or the like, which is indicated in the processing of 3. described above, the processing of "credit" or the like related to the settlement may be made unnecessary. At this time, the settlement token chain B is in a state where the D coins (tokens) indicating the allowable payment amount have already been remitted in the processing of 2. Therefore, the server B (102) of the settlement token chain B may make a transaction only by the processing in the settlement token chain B, and may make a transaction without communicative connection to the server C (103) or the crypto asset chain A (101) for each transaction (enabling offline operation).

Furthermore, in the processing of 3. described above, the server B (102) of the settlement token chain B may sequentially execute the processing for each payment transaction with the D coins that have been remitted, without communicating with the server C (103) and even with the server A (101) of the crypto asset chain A for each transaction of the user. For example, even in a case where a state occurs where the server B (102) of the settlement token chain B is not capable of communicating with the server C (103) when the user purchases a product at an overseas travel destination such as an area where a communication environment is poor, a payment transaction such as a credit settlement may be completed. In this way, according to the embodiment, when a user purchases a product, it is possible to make connection to a server that manages credit information unnecessary.

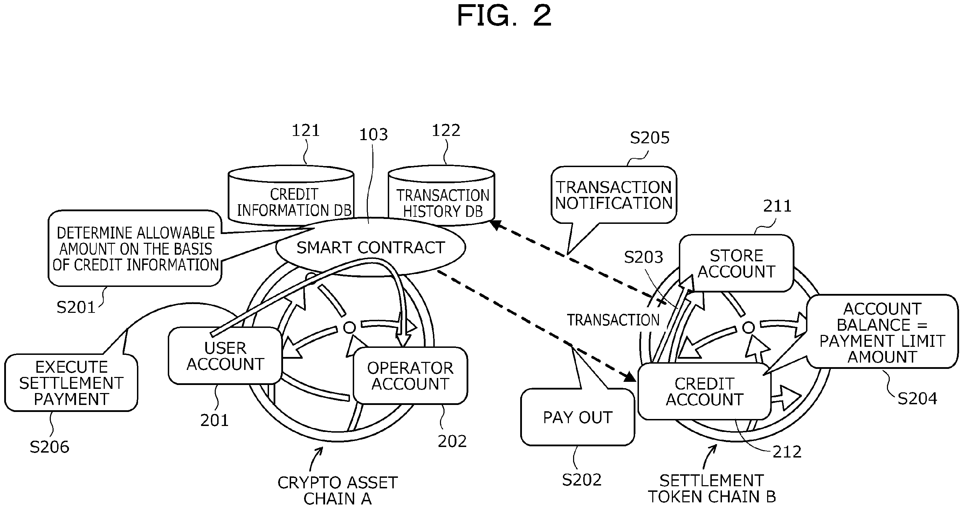

FIG. 2 is a diagram illustrating an exemplary structure of the blockchains including the information processing apparatus according to the embodiment. The crypto asset chain A and the settlement token chain B described above as two different blockchains are illustrated, and the smart contract (server C) 103 is communicatively connected to the crypto asset chain A and the settlement token chain B to mediate mutual transactions. The server C (103) includes the DBs of the credit information DB 121 and the transaction history DB 122.

The crypto asset chain A includes a user account 201 owned by a user and an operator account 202 owned by an operator of the crypto asset chain A, and the server A (101) described above may access the user account 201 and the operator account 202.

The settlement token chain B includes a store account 211 for selling a product and a credit account 212 held by a user, and the server B (102) described above may access the store account 211 and the credit account 212.

A flow of a transaction performed by each of the crypto asset chain A, the settlement token chain B, and the smart contract (server C) 103, corresponding to each of the processing of 1. to 4. described above, will be described with reference to FIG. 2.

First, in 1. "Payout request of D coins by a user before settlement", a payout request amount is input by the user. As a result, the smart contract (server C) 103 determines an allowable payment amount of D coins on the basis of credit information held in the credit information DB 121 (Step S201).

Thereafter, as the processing of 2. "Remittance of D coins to the settlement token chain B", the smart contract (server C) 103 pays out the allowable payment amount (D coins) held by the operator account 202 to the credit account 212 of the settlement token chain B (Step S202). More specifically, after remittance to a payout account of the user on the settlement token chain B, payout is made from the payout account to the credit account 212.

Thereafter, for each transaction of the user, the server B (102) of the settlement token chain B performs the processing related to 3. "Transaction of D coins on the settlement token chain B". At this time, the server B (102) permits a transaction within a range of an account balance of the credit account 212 for each transaction such as purchase of a product of the user.

Then, the server B (102) remits D coins equivalent to a transaction amount from the credit account 212 to the store account 211 for each transaction of the user (Step S203), and sets the account balance of the credit account 212 to a payment limit amount for the next and subsequent times (Step S204). Furthermore, the server B (102) notifies the smart contract (server C) 103 of transaction information for each transaction (Step S205). As a result, the smart contract (server C) 103 may accumulate a history of each transaction in the transaction history DB 122, and the information in the transaction history DB 122 may be synchronized with a transaction of the user on the settlement token chain B.

Thereafter, the smart contract (server C) 103 performs the processing of 4. "Transaction aggregation and collection of Y coins" at a predetermined time such as a settlement date, and pays the Y coins obtained by the transaction aggregation from the user account 201 to the operator account 202 on the crypto asset chain A (Step S206). The settlement date is, for example, date and time after an end of overseas travel set by the user, or date and time set in advance as a credit settlement date. The Y coin to be collected is a total transaction amount of the user after rate conversion of the D coin.

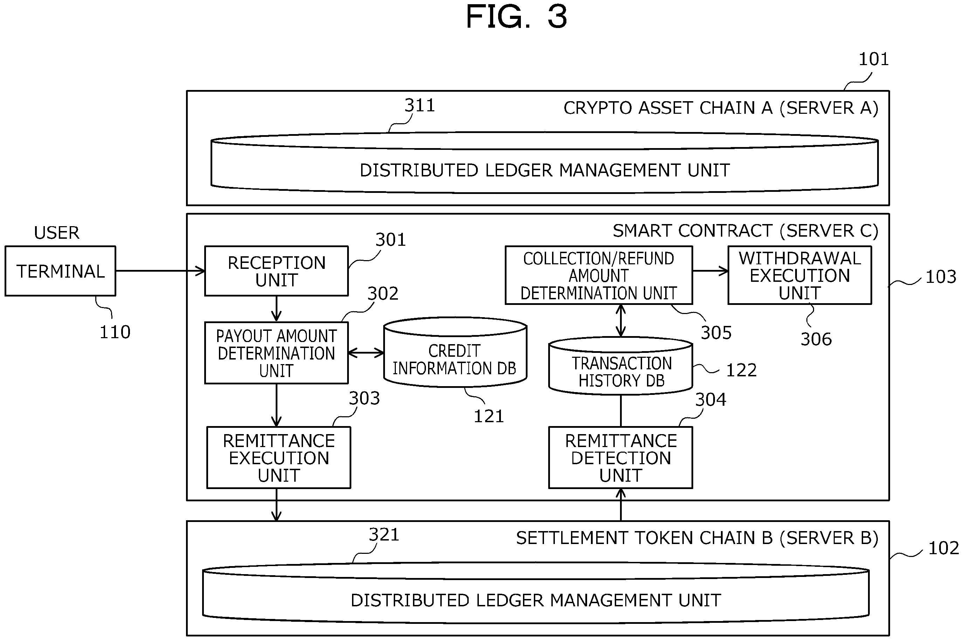

FIG. 3 is a block diagram illustrating an exemplary structure of the information processing apparatus according to the embodiment. Functions of the smart contract (server C) 103 as the information processing apparatus are mainly illustrated, and functions of the crypto asset chain A (server A) 101 and the settlement token chain B (server B) 102 that are communicatively connected to the server C (103) are also described.

The server A (101) of the crypto asset chain A and the settlement token chain B include general-purpose distributed ledger management units 311 and 321, respectively. The distributed ledger management unit 311 of the server A (101) manages the user account 201 and the operator account 202 in the crypto asset chain A, and exchanges information with the server C (103). The distributed ledger management unit 321 of the server B (102) manages the store account 211 and the credit account 212 in the settlement token chain B, and exchanges information with the server C (103).

The smart contract (server C) 103 includes functions of the credit information DB 121 and the transaction history DB 122 described above, a reception unit 301, a payout amount determination unit 302, a remittance execution unit 303, and a remittance detection unit 304. Furthermore, the smart contract (server C) 103 includes functions of a collection/refund amount determination unit 305 and a withdrawal execution unit 306.

The reception unit 301 is communicatively connected to the terminal 110 of a user of crypto assets who uses a service, and receives, at a time before a transaction with D coins is made, an application for use of a payout request amount of the transaction described above, by an operation of the terminal 110 by the user. For example, the user makes the application for use by using predetermined authentication data (for example, a permission code). This application for use corresponds to a request for permission to execute an asset transfer transaction with an upper limit from the user account 201 holding crypto assets (Y coins) of the user on the crypto asset chain A to the specified operator account 202.

The permission code is authentication information indicating that it is agreed to transfer Y coins from the user account 201 to the credit company account (credit account) 212. In this permission code, an issue limit amount as the upper limit of the transfer, and an expiration date are set. The server C (103) holds the received permission code in a memory or the like, and uses the permission code again at the time of a settlement.

The payout amount determination unit 302 extracts, by a permission code received by the reception unit 301, credit information stored in the credit information DB 121 that manages solvency of a user and a payout amount specified in the permission code. Then, when a payout request amount is within an issue limit amount of the credit information, the payout amount determination unit 302 determines a predetermined allowable payment amount (equivalent to a token) to be remitted to the credit account 212 of the user on the settlement token chain B.

The remittance execution unit 303 causes an allowable payment amount (token amount) determined by the payout amount determination unit 302 to be remitted from the user account 201 on the crypto asset chain A to the user account (for example, credit account 212) on the settlement token chain B.

The remittance detection unit 304 monitors all remittance transactions between the accounts (the store account 211, the credit account 212, and the like) that occur on the settlement token chain B, and records, in the transaction history DB 122, a set of a remittance source account number (credit account 212) and a remittance amount of the detected remittance transactions.

The collection/refund amount determination unit 305 acquires, for every fixed period corresponding to a settlement date, a remittance history which is recorded in the transaction history DB 122 and in which the user account (credit account 212) on the settlement token chain B is a remittance source. Then, the collection/refund amount determination unit 305 determines an amount of a settlement payment of crypto assets (Y coins) to collect the crypto assets equivalent to a total remittance amount on the settlement date from the user account 201 on the crypto asset chain A by using information included in a permission code.

Furthermore, in a case where it is desired to stop a user from using the system, the collection/refund amount determination unit 305 performs, for example, a remaining token amount after the transaction (asset transfer of the entire remaining amount) to a specified account of an operator or the like for tokens remitted by the user to the settlement token chain B. In this case, the collection/refund amount determination unit 305 performs a refund procedure in which a payment amount in the transaction is deducted from an allowable payment amount, discards the stored permission code, and refunds (clears) the confirmed settlement amount to the user account 201.

The withdrawal execution unit 306 receives a determination of an amount of a settlement payment by the collection/refund amount determination unit 305, and executes asset transfer of crypto assets (Y coins) from the user account 201 to a specified account (for example, the operator account 202) of a settlement token issuer.

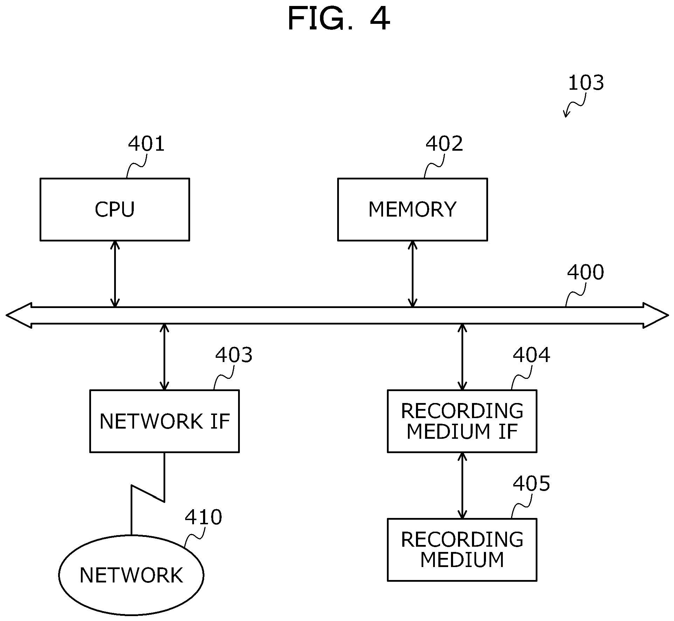

FIG. 4 is a diagram illustrating an exemplary hardware structure of the information processing apparatus according to the embodiment. The server C (103) having the functions of the information processing apparatus (smart contract) described above may be configured by, for example, hardware illustrated in FIG. 4.

For example, the server C (103) includes a central processing unit (CPU) 401, a memory 402, a network interface (IF) 403, a recording medium IF 404, and a recording medium 405. A bus 400 connects each of the units.

The CPU 401 is an arithmetic processing unit that functions as a processing unit that controls the entire processing of the server C (103). The memory 402 includes a nonvolatile memory and a volatile memory. The nonvolatile memory is, for example, a read only memory (ROM) that stores a program of the CPU 401. The volatile memory is, for example, a dynamic random access memory (DRAM) or a static random access memory (SRAM) used as a work area of the CPU 401.

The network IF 403 is an interface communicatively connected to a network 410 such as a local area network (LAN), a wide area network (WAN), or the Internet. Via the network IF 403, the server C (103) is communicatively connected to the external server A (101), server B (102), and terminal 110.

The recording medium IF 404 is an interface for reading and writing information processed by the CPU 401 to and from the recording medium 405. The recording medium 405 is a recording device that assists the memory 402. As the recording medium 405, for example, a hard disk drive (HDD), a solid state drive (SSD), a universal serial bus (USB) flash drive, or the like may be used.

By executing a program recorded in the memory 402 or the recording medium 405 by the CPU 401, each function of the server C (103) illustrated in FIG. 3 is implemented. Furthermore, by the memory 402 and the recording medium 405, it is possible to implement the function of recording and holding information of the credit information DB 121, the transaction history DB 122, and the like illustrated in FIG. 3.

The hardware structure illustrated in FIG. 4 may also be applied to the server A (101), the server B (102), and the terminal 110 (for example, a smartphone) illustrated in FIG. 1, and the control system of the embodiment may be implemented by using a general-purpose hardware configuration. Here, the terminal 110 has a touch panel, for example, so that it is possible to perform an operation input and display output of information to a user

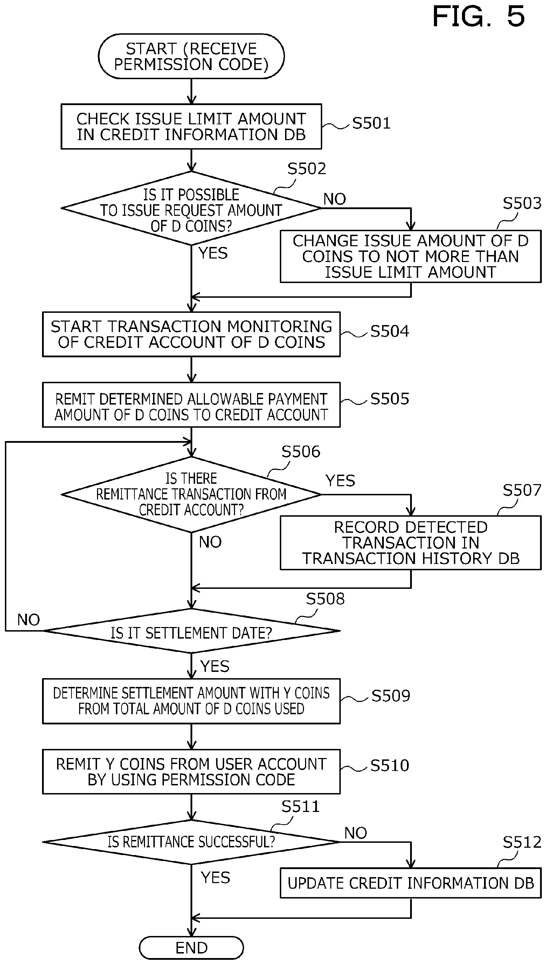

FIG. 5 is a flowchart illustrating an example of processing a transaction performed by the information processing apparatus according to the embodiment. An example of processing related to a transaction of a user, in which a program is executed by the control unit (CPU 401) of the server C (103) is illustrated.

First, the control unit starts execution of the following processing by receiving a permission code by an operation the terminal 110 by a user at a time before a settlement of a transaction. The permission code includes a request amount of an issuance (payout) request of D coins by the user, and is transmitted from the terminal 110.

When receiving the permission code, the control unit refers to the credit information DB 121 to check an issue limit amount of the user (Step S501). Then, the control unit determines whether it is possible to issue the request amount of the D coins (Step S502).

For example, the control unit performs rate conversion of Y coins held by the user account 201 on the crypto asset chain A into D coins, and when an amount of D coins held by the user is not more than the request amount, determines that it is possible to issue the D coins (Step S502: Yes). Then, the processing proceeds to Step S504. On the other hand, when the amount of the D coins held by the user exceeds the request amount, it is determined that it is not possible to issue the D coins (Step S502: No), and the processing proceeds to processing of Step S503.

In Step S503, the control unit changes an issue amount of the D coins to not more than the issue limit amount (Step S503), and the processing proceeds to the processing of Step S504. In Step S504, the control unit starts transaction monitoring of the user account (for example, credit account 212) on the settlement token chain B of the D coins (Step S504).

Next, the control unit causes the determined allowable payment amount of the D coins to be remitted to the user account (credit account 212) on the settlement token chain B (Step S505). For example, the control unit (CPU 401) of the server C (103) transmits, to the crypto asset chain A, an instruction to notify the settlement token chain B of the allowable payment amount, and causes the allowable payment amount of the D coins to be remitted from the crypto asset chain A to the user account (credit account 212) on the settlement token chain B. The control unit (CPU 401) performs the above preprocessing at the time before a settlement.

Thereafter, the control unit executes processing of Step S506 and subsequent steps based on an actual transaction such as purchase of a product on the settlement token chain B by the user. First, the control unit determines detection of a remittance transaction from the user account (credit account 212) to another account (for example, store account 211) on the settlement token chain B due to a transaction of the user (Step S506).

When the remittance transaction is detected in Step S506 (Step S506: Yes), the control unit records content of the detected transaction in the transaction history DB 122 (Step S507), and the processing proceeds to processing of Step S508. On the other hand, when the remittance transaction is not detected (Step S506: No), the processing proceeds to processing of Step S508.

In Step S508, the control unit determines whether or not it is a settlement date (Step S508). When the current date has not reached the settlement date (Step S508: No), the processing returns to the processing of Step S506. Then, when the current date becomes the settlement date (Step S508: Yes), the control unit proceeds to processing of Step S509.

In Step S509, the control unit determines a settlement amount with Y coins by rate conversion from a total amount of D coins used by the user (Step S509). Then, the settlement amount of the Y coins is remitted from the user account 201 to the operator account 202 by using the permission code (Step S510).

Next, the control unit determines whether or not the remittance is successful (Step S511). When the remittance is successful (Step S511: Yes), the above processing ends. When the remittance is not successful (Step S511: No), the control unit updates the credit information DB 121 (Step S512), and the above processing ends.

Here, when the remittance is not successful, for example, the amount of the Y coins held in the user account 201 decreases at the time of the remittance, and the amount is not more than the settlement amount, which corresponds to a situation of insolvency. In this case, the control unit stores, in the credit information DB 121, the information regarding insolvency of the user and information such as a predetermined credibility score calculated based on an insolvency amount, the number of times of insolvency, and the like, and changes credit information of the user relatively low.

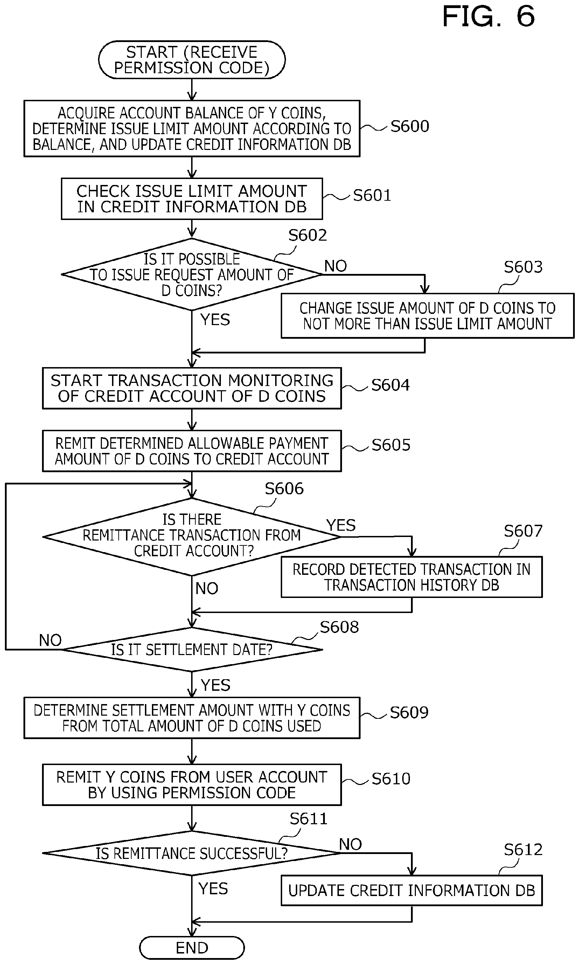

FIG. 6 is a flowchart illustrating another example of processing a transaction performed by the information processing apparatus according to the embodiment. Processing illustrated in FIG. 6 (Step S601 to Step S612) is the same as the processing illustrated in FIG. 5 (Step S501 to Step S512). The processing illustrated in FIG. 6 differs in that processing of Step S600 is newly added at the start of the preprocessing.

In Step S600, when receiving the permission code from the terminal 110 of the user, the control unit acquires an account balance of the user account 201 of Y coins, determines an issue limit amount according to the balance, and updates the credit information DB 121 (Step S600). Thereafter, the control unit executes the processing of Step S601 and subsequent steps. For example, the issue limit amount is determined to be not more than the balance of the user account 201. Furthermore, the issue limit amount may also be determined at a predetermined rate (for example, 50% to 80%) for each balance.

By the processing of Step S600 described above, the issue limit amount according to the balance of the Y coins held by the user on the crypto asset chain A may be determined, and the allowable payment amount may be calculated within a range of the issue limit amount. As a result, the balance of the Y coins held by the user may be reflected, and an appropriate issue limit amount and allowable payment amount may be set in response to a case where the balance largely fluctuates over time, or the like.

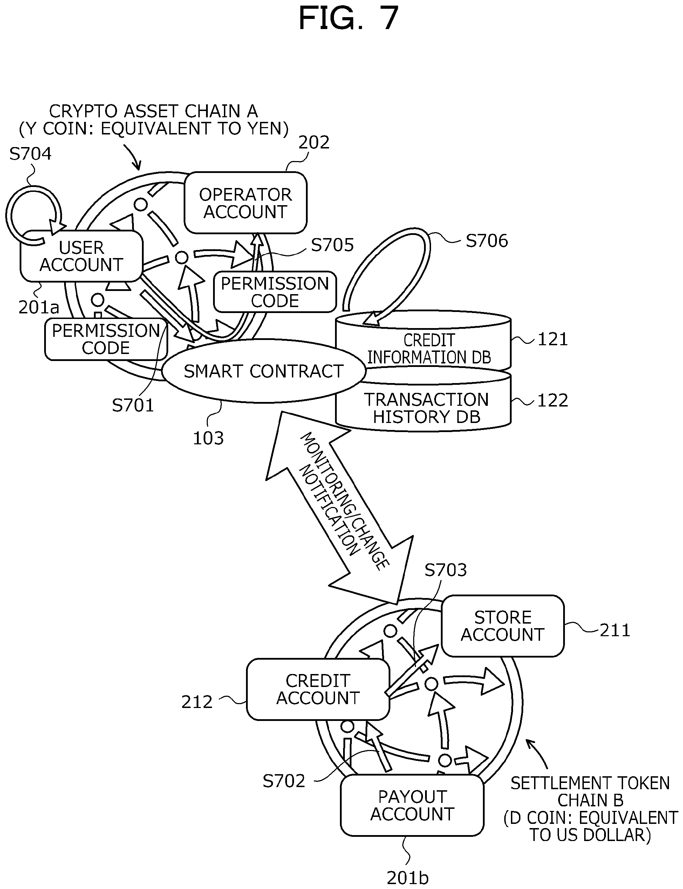

FIG. 7 is an explanatory diagram illustrating a specific example of a transaction performed by the information processing apparatus according to the embodiment. A specific example of the processing corresponding to the example of the processing of FIG. 5 will be described.

In this FIG. 7, a user has a user account 201a on the crypto asset chain A and a payout account 201b on the settlement token chain B. It is assumed that the server C (103) may monitor account balances of the user account 201a and the payout account 201b.

In addition, it is assumed that the user who holds crypto assets (Y coins) uses D coins (for example, equivalent to US dollars) for a payment at a store at an overseas travel destination. Y is a reference sign meaning yen and D is a reference sign meaning US dollar, and it is assumed that a currency rate at the time of a settlement is 110 yen/dollar. Furthermore, the terminal 110 of the user, for example, a smartphone, has a wallet application installed in advance and has a private key for signature. Then, by an operation of the user, a predetermined barcode, for example, a QR code (registered trademark) or the like is displayed on a screen of the terminal 110, and a specified request amount of D coins may be transferred by the QR code.

First, the user operates the terminal 110 as a preliminary preparation for purchasing a product at the overseas travel destination, transmits issuance of a predetermined unit of D coins with a permission code to the server C (103) of the smart contract, and makes an application for use of the D coins (Step S701). For example, it is assumed that the user makes a request with a payout request amount of 500 dollars in D coins for the payment while the overseas travel.

As a result, when the account balance of the user account 201a is equivalent to 500 dollars or more (for example, 55,000 yen in Y coins), the server C (103) sets the entire request amount as an allowable payment amount. In this case, the server C (103) transfers the set allowable payment amount of 500 dollars in D coins from the payout account 201b of the user to the credit account 212 (Step S702). Here, when the account balance (Y coins) of the user account 201a is 50,000 yen, the server C (103) sets an issue limit amount equivalent to 50,000 yen in Y coins (equivalent to 455 dollars in terms of D coin), sets the allowable payment amount with this issue limit amount as an upper limit, and transfers the D coins.

Thereafter, it is assumed that the user uses a total of 300 dollars in D coins by purchasing a product a plurality of times at the overseas travel destination (Step S703). Since the account of the user (payout account 201b) is an object of transaction monitoring and the D coins are managed by the distributed ledger management unit 321 of the settlement token chain B, a transaction history may be collected by the server C (103). Here, when the user makes a payment during the overseas travel, a remittance transaction occurs every time D coins are transferred from the payout account 201b of the D coins to another account (credit account 212). Furthermore, a remittance transaction occurs from the credit account 212 to the store account 211 for each purchase of a product. At this time, in the server C (103), the remittance detection unit 304 performing transaction monitoring records transaction content in the transaction history DB 122.

Here, the user pools the balance so that the balance of the Y coins of the user account 201a becomes 300 dollars (300 dollars × 110 yen/dollar = 33,000 yen) or more in Y coins by a settlement date after the travel (Step S704).

Then, the server C (103) refers to the transaction history DB 122 on the settlement date to aggregate an amount of D coins (300 dollars) used by the user in D coins. Then, 33,000 yen in Y coins, which is the equivalent amount, is collected as a price from the user account 201a to the operator account 202 for collection by an operator by using the permission code (Step S705) .

At the time of this settlement, when the balance of the user account 201a of the user is insufficient and the collection fails, a credibility score of the user is changed low based on the number of failures, or the like, and is recorded in the credit information DB 121 (Step S706). For example, it is possible perform processing in which the credibility score is halved and the allowable payment amount to be paid out is halved by three failures of the collection after the settlement, and use of the system by the user is prohibited by six failures, or the like.

In the embodiment described above, transmission of the token indicating the allowable payment amount is performed only once corresponding to one permission code. Not limited to this, for example, the control unit of the server C (103) may automatically replenish the token within the range of the issue limit amount. As a result, the token amount indicating the allowable payment amount may be increased a plurality of times within the range of the issue limit amount for each user, and a user may omit the procedure using the permission code. Furthermore, when the payment amount approaches the allowable payment amount due to a plurality of transactions by the user, the allowable payment amount (token amount) may be increased within the range of the issue limit amount in a form of an additional charge by specification by the user.

In addition, when it is desired to stop the user from using the system, for example, a remaining token amount (asset transfer of the entire remaining amount) to a specified account of an operator or the like may also be performed by the user from the payout account 201b on the settlement token chain B. In this case, the control unit of the server C (103) (for example, the collection/refund amount determination unit 305) performs the refund procedure in which the payment amount is deducted from the allowable payment amount, and discards the stored permission code. As a result, the settlement amount may be confirmed and a checkout procedure may be performed simply by the remittance of the token to the specified account.

According to the embodiment described above, the crypto asset chain A that handles a Y coin as a first currency and the settlement token chain B that handles a D coin as a second currency are linked by the server C (103). The server C (103) has a smart contract function, and when receiving an issuance request of D coins from a user, determines an allowable payment amount of the D coins on the basis of credit information (121) of the user. Then, an instruction to notify the settlement token chain B of the allowable payment amount is transmitted to the crypto asset chain A. Furthermore, when a payment transaction with D coins by the user is recorded in the settlement token chain, the server C (103) transmits, to the crypto asset chain, an instruction to collect Y coins having a value corresponding to the D coins from a user account on the crypto asset chain A. As a result, by transmitting the allowable payment amount from the crypto asset chain A to the settlement token chain B on the basis of the credit information of the user at a time before the user uses the service, the user will be able to pay a price to a store on the settlement token chain B within a range of the allowable payment amount for each payment transaction.

Furthermore, the server B (102) that manages the settlement token chain B may process a payment transaction of the user only in the settlement token chain B in an offline state not communicating with the outside of the settlement token chain B after receiving a token indicating the allowable payment amount of the user. The server B (102) causes the D coins to be transferred from the account of the user to an account of a payment destination such as a store within the range of the allowable payment amount for each transaction. Then, the server C (103) aggregates payment transactions with the Y coins of the user on a predetermined settlement date on the basis of a transaction history including information for each payment transaction of the user, and causes the server A (101) that manages the crypto asset chain A to perform collection with the Y coins. As a result, every time the user makes a transaction such as purchase of a product, the server B (102) of the settlement token chain B may execute the transaction without a need to make a communicative connection with the external server A (101), server C (103), and the like. For example, even in a case where a state occurs where the server B (102) of the settlement token chain B is not capable of communicating with the server C (103) when the user purchases a product at an overseas travel destination such as an area where a communication environment is poor, a transaction such as a credit settlement may be completed. At this time, it is unnecessary to make connection to the server that manages the credit information each time the user purchases a product, as in the past.

Furthermore, when receiving a payout request of the D coins from the user, the server C (103) may also refer to the credit information (121) of the user to determine the allowable payment amount on the basis of an account balance of the Y coins of the user. As a result, the user may make a transaction such as purchase of a product within the range of the allowable payment amount based on the balance of the Y coins as crypto assets held by the user, and may make a settlement safely.

Furthermore, when receiving the payout request of the D coins from the user, the server C (103) refers to the credit information (121) of the user to determine an issue limit amount of currencies of the Y coins within the range of the account balance of the Y coins of the user, and determines a predetermined allowable payment amount within a range of the issue limit amount. As a result, when the payout amount of the D coins is within the range of the issue limit amount, it is unnecessary to receive a payout request of the D coins from the user every time a transaction is made, the allowable payment amount may be automatically determined, and it becomes possible to exercise control such that a token indicating the allowable payment amount is transmitted from the crypto asset chain A to the settlement token chain B. For example, the token amount indicating the allowable payment amount may be automatically increased a plurality of times within the range of the issue limit amount for each user, and it is possible to omit the procedure using the permission code by the user every time.

Furthermore, the credit information (121) includes a credibility score indicating credibility of the user, and the server C (103) may also change the credibility score on the basis of a collection state for each collection. For example, each time the collection fails, the credibility score of the user may be lowered, and a subsequent allowable payment amount may be gradually limited. As a result, as a penalty for each occurrence of nonpayment by the user, the allowable payment amount (token amount) that may be used in the system may be gradually lowered, and a risk of nonpayment may be reduced by setting the allowable payment amount issued based on the credibility score as an upper limit.

From the above, according to the embodiment, it is possible to provide a new settlement technology using a blockchain. Furthermore, complexity of a settlement procedure in different currencies may be reduced. In addition, assets managed by different blockchains may be linked, a transaction in one settlement token chain B may be reflected in another crypto asset chain A, and asset transfer between a plurality of existing blockchains may be performed easily.

Note that the control method described in the embodiment of the present invention may be implemented by causing a processor such as a server to execute a program prepared in advance. The present control method is recorded on a computer-readable recording medium such as a hard disk, a flexible disk, a compact disc-read only memory (CD-ROM), a digital versatile disk (DVD), or a flash memory, and is read from the recording medium and executed by the computer. Furthermore, the present control method may also be distributed via a network such as the Internet.

### [Reference Signs List]

100 Control system
101 Server A (Crypto asset chain A)
102 Server B (Settlement token chain B)
103 Server C (Smart contract)
110 Terminal
121 Credit information database
122 Transaction history database
201, 201a User account
201b Payout account
202 Operator account
211 Store account
212 Credit account
301 Reception unit
302 Payout amount determination unit
303 Remittance execution unit
304 Remittance detection unit
305 Collection/refund amount determination unit
306 Withdrawal execution unit
311, 321 Distributed ledger management unit
401 CPU
402 Memory
403 Network interface
405 Recording medium
410 Network

## Claims

1. A control method executed by a computer of information apparatus, in which the information processing apparatus controls a link between a first blockchain that handles a first currency and a second blockchain that handles a second currency, the control method comprising:
determining, when an issuance request of the second currency is received from a user, an allowable payment amount of the second currency based on credit information of the user;
transmitting, to the first blockchain, an instruction to notify the second blockchain of the allowable payment amount; and
transmitting, when a payment transaction in the second currency by the user is recorded in the second blockchain, an instruction to collect the first currency that has a value that corresponds to the second currency from an account of the user on the first blockchain, to the first blockchain.

2. The control method according to claim 1, wherein
a computer that manages the second blockchain:
transfers, after the allowable payment amount of the user is received, the second currency from the account of the user to an account of a payment destination within a range of the allowable payment amount each time the user makes a payment transaction only in the second blockchain in an offline state that is state without communication with an outside of the second blockchain, and
the computer of the information processing apparatus:
aggregates payment transactions in the first currency by the user on the basis of a transaction history that includes information for each payment transaction of the user, and
transmits, to a computer that manages the first blockchain, an instruction to perform the collection on the basis of the aggregated payment transactions on a settlement date.

3. The control method according to claim 1, wherein
the computer of the information processing apparatus:
determining the allowable payment amount on the basis of an account balance of the first currency of the user by referring to the credit information of the use r, when the issuance request issuance of the second currency is received from the user.

4. The control method according to claim 1, wherein
the computer of the information processing apparatus:
determines, when the issuance request of the second currency is received from the user, an issue limit amount of the second currency within a range of an account balance of the first currency of the user based on the credit information of the user,
determines the allowable payment amount within a range of the corresponding issue limit amount, and
automatically determines, when the allowable payment amount of the second currency is within the range of the issue limit amount, the allowable payment amount without reception of the issuance request of the second currency from the user, and
transmits, to the first blockchain, the instruction to notify the second blockchain of the allowable payment amount.

5. The control method according to any one of claims 1 to 4, wherein
the credit information includes a credibility score that indicates credibility of the user, and
the computer of the information processing apparatus changes the credibility score on the basis of a collection state for each of the collection.

6. A control program that controls a link between a first blockchain that handles a first currency and a second blockchain that handles a second currency, the control program in which a computer of an information apparatus performs processing of:
determining, when an issuance request of the second currency is received from a user, an allowable payment amount of the second currency based on credit information of the user;
transmitting, to the first blockchain, an instruction to notify the second blockchain of the allowable payment amount; and
transmitting, when a payment transaction in the second currency by the user is recorded in the second blockchain, an instruction to collect the first currency that has a value that corresponds to the second currency from an account of the user on the first blockchain, to the first blockchain.

7. An information processing apparatus controls a link between a first blockchain that handles a first currency and a second blockchain that handles a second currency, the information processing apparatus comprising:
a reception unit configured to receive an issuance request of the second currency is received from a user
a remittance execution unit configured to determine an allowable payment amount of the second currency based on credit information of the user and transmit, to the first blockchain, an instruction to notify the second blockchain of the allowable payment amount; and
a withdrawal execution unit configured to transmit, when a payment transaction in the second currency by the user is recorded in the second blockchain, an instruction to collect the first currency that has a value that corresponds to the second currency from an account of the user on the first blockchain, to the first blockchain.

8. A control system comprising:
a first server configured to manage asset transfer with in a first blockchain that handles a first currency;
a second server configured to manage asset transfer with in a second blockchain that handles a second currency;
an information processing apparatus configured to control a link the first blockchain and the second blockchain; and
a terminal configured to be operated by a user who have assets in the first blockchain and the second blockchain, wherein
the information processing apparatus includes:
a reception unit configured to receive an issuance request of the second currency is received from a user
a remittance execution unit configured to determine an allowable payment amount of the second currency based on credit information of the user and transmit, to the first blockchain, an instruction to notify the second blockchain of the allowable payment amount; and
a withdrawal execution unit configured to transmit, when a payment transaction in the second currency by the user is recorded in the second blockchain, an instruction to collect the first currency that has a value that corresponds to the second currency from an account of the user on the first blockchain, to the first blockchain.

9. The control system according to claim 8, wherein
the second server includes
a control unit configured to perform a process that transfers, after the allowable payment amount of the user is received, the second currency from the account of the user to an account of a payment destination within a range of the allowable payment amount each time the user makes a payment transaction only in the second blockchain in an offline state that is state without communication with an outside of the second blockchain.
